# DEMANDE DE BREVET EUROPEEN

(11) **EP 4 380 041 A1**
(43) Date de publication de la demande: **05.06.2024**
(21) Numéro de dépôt: 23213711.7
(22) Date de dépôt: 01.12.2023
(51) Int. Cl.: H02S 50/00

(54) **PROCÉDÉ DE MESURE POUR UN SYSTÈME PHOTOVOLTAÏQUE ET ENSEMBLE ÉLECTRIQUE**

(30) Priorité: 02.12.2022 FR 2212664
(71) Demandeur: Beem, 44200 Nantes (FR)
(72) Inventeur: ROGER, Pierre-Emmanuel, 44200 SAINT-SEBASTIEN-SUR-LOIRE (FR)
(74) Mandataire: AtlantIP International

(57) **Abrégé**

L'invention concerne un procédé de mesure d'une puissance électrique produite par un système photovoltaïque (1), configuré pour pouvoir être raccordé électriquement à un réseau électrique domestique (2), le système photovoltaïque (1) étant branché à une prise électrique (25) d'un circuit électrique (24) situé en aval d'un disjoncteur général (22) de sorte à pouvoir injecter sur le réseau électrique domestique (2) une énergie électrique obtenue par transformation d'une énergie solaire incidente, le procédé de mesure permettant de connaître et mesurer localement, au niveau du module de commande (13), le fonctionnement dudit système photovoltaïque (1).

## Description

Le contexte technique de la présente invention est celui des panneaux photovoltaïques ou solaires. Plus particulièrement, l'invention a trait à un procédé de mesure pour un système photovoltaïque et à un ensemble électrique.

Le contexte de la présente invention adresse de manière exclusive le domaine de la production d'énergie photovoltaïque pour des utilisateurs particuliers, en opposition à des parcs photovoltaïques ou à des installations photovoltaïques visant à produire de grandes quantité d'énergie, de l'ordre de plusieurs mégawatts, afin d'alimenter en électricité des quartiers, des villes ou des sites industriels. Ainsi, le domaine de la présente invention adresse les systèmes photovoltaïques produisant plusieurs kilowatts d'énergie électrique à partir d'une énergie solaire ou photovoltaïque.

D'année en année, le réchauffement climatique est une préoccupation de plus en plus prégnante, que cela soit pour les particuliers ou l'industrie, entraînant le développement d'énergies alternatives, tel que l'énergie solaire, afin de réduire les émissions de gaz à effet de serre.

L'énergie solaire présente, entre autres, les avantages d'être inépuisable, écologique, et d'avoir vu son prix diminuer fortement ces dernières années, la rendant compétitive au regard des sources d'énergie classiques, telles que le pétrole, le nucléaire, etc. l'énergie solaire étant l'énergie alternative présentant la plus forte croissante.

De manière connue, un panneau photovoltaïque installé sur le toit ou le mur d'un bâtiment, permet de maximiser la quantité d'énergie solaire reçue par le panneau, et d'optimiser sa production d'électricité. Une fois installé, le panneau photovoltaïque est raccordé au réseau électrique domestique afin que l'énergie électrique ainsi produite puisse être injectée sur le réseau.

Le développement des systèmes photovoltaïques pouvant être directement branché sur les réseaux électriques domestiques, par l'intermédiaire d'un raccordement électrique direct sur une prise électrique, va croissant. Devant l'augmentation et la multiplication de tels systèmes photovoltaïques dit « plug and play », c'est-à-dire directement utilisable après leur branchement, il devient nécessaire de proposer diverses fonctionnalités permettant d'améliorer l'expérience utilisateur de tels systèmes photovoltaïques, leur efficacité, leur capacité d'adaptation ou encore leur capacité de diagnostic ou de dépannage.

A ces fins, et selon un premier aspect de l'invention, on atteint au moins l'un des objectifs précités avec un procédé de mesure de puissance électrique produite par au moins un système photovoltaïque, chaque système photovoltaïque comprenant :
- un panneau photovoltaïque configuré pour générer un signal électrique continu de sortie à partir d'une énergie solaire ;
- un onduleur configuré pour transformer le signal électrique continu de sortie généré par le panneau photovoltaïque en un signal électrique alternatif adapté à un réseau électrique domestique ;
- un câble électrique dont une première extrémité est reliée électriquement à l'onduleur et une deuxième extrémité comporte un dispositif de connexion électrique permettant de coupler électriquement le système photovoltaïque sur le réseau électrique domestique ;
- un module de commande relié électriquement à l'onduleur et au dispositif de connexion électrique.

Selon le premier aspect de l'invention, le procédé comporte une étape de mesure d'une puissance électrique produite par le système photovoltaïque, l'étape de mesure de la puissance électrique étant réalisée par le module de commande.

Dans le contexte de la présente invention, le système photovoltaïque prend la forme d'une installation photovoltaïque domestique configurée pour produire au plus quelques kilowattheures par jour. Le système photovoltaïque est ainsi un ensemble électrique pouvant être branché directement au réseau électrique domestique par le biais de son câble électrique, et par l'intermédiaire d'une prise électrique du réseau électrique domestique. Dans le contexte de l'invention, le système photovoltaïque n'est pas une installation industrielle.

Dans le contexte de la présente invention, le panneau photovoltaïque comporte un ou plusieurs panneaux solaires. Chaque panneau solaire est configuré pour convertir une énergie solaire en une énergie électrique, et éventuellement thermique. Par énergie solaire, on comprend ici une énergie lumineuse transportée par le rayonnement solaire incident. D'une manière générale, le panneau solaire comporte une pluralité de capteurs solaires photovoltaïques permettant de transformer l'énergie solaire en énergie électrique. Dans le contexte de la présente invention, limité à l'usage domestique, le panneau photovoltaïque présente une surface de panneaux solaires de quelques mètres carré, voire de plusieurs dizaines de mètres carrés. D'une manière générale, le panneau photovoltaïque présente une surface de panneaux solaires inférieurs à 100 m². Complémentairement, le système photovoltaïque comprend aussi un dispositif de fixation permettant, d'une part, de fixer solidairement le panneau photovoltaïque à un support et, d'autre part, d'incliner ledit panneau photovoltaïque relativement à au moins un axe de rotation. Le support peut être de n'importe quelle constitution, destination, forme ou orientation. A titre d'exemple non limitatif, le support peut être avantageusement un mur, un toit ou même une terrasse.

Dans le contexte de la présente invention, le réseau électrique domestique est une installation électrique domestique telle qu'on en trouve dans l'habitat individuel ou collectif. Un tel réseau électrique domestique comporte un disjoncteur général permettant d'isoler le réseau électrique domestique d'un réseau de distribution électrique. En aval du disjoncteur général, le réseau électrique domestique comporte généralement un ou plusieurs consommateurs électriques, tels que par exemple des sources d'éclairage, des sources de chauffage, des appareils électroménager. Les consommateurs électriques sont localisés dans l'habitat, chaque consommateur électrique étant relié au disjoncteur général par l'intermédiaire d'un circuit électrique, préférentiellement via un disjoncteur spécifique permettant de sécuriser ledit circuit électrique. Dans le contexte de la présente invention, le système photovoltaïque s'intègre dans un tel réseau électrique domestique, devenant ainsi un producteur électrique associé aux consommateurs électriques précités.

Dans le contexte de la présente invention, le réseau électrique comporte une pluralité de circuits électrique déployés en aval du disjoncteur général. Le disjoncteur général protège électriquement l'ensemble du réseau électrique domestique, c'est-à-dire l'ensemble des circuits électriques. Les circuits électriques sont protégés individuellement par des disjoncteurs thermiques dans le tableau électrique. En d'autres termes, chaque circuit électrique est relié au disjoncteur général par l'intermédiaire d'un disjoncteur thermique.

Dans le contexte de la présente invention, le module de commande est un boitier électronique situé entre le panneau photovoltaïque et la prise électrique au travers de laquelle le système photovoltaïque est connecté au réseau électrique domestique. Le module de commande permet d'interfacer le système photovoltaïque et d'implémenter certaines fonctionnalités techniques qui seront décrites ci-après. De manière particulièrement avantageuse, le module de commande permet de faciliter l'interface électrique du système photovoltaïque avec le réseau électrique domestique et en fonction de son installation, des usages et des besoins de l'utilisateur.

Dans le contexte de la présente invention, l'onduleur comporte un convertisseur de tension continue en une tension alternative, monophasée ou polyphasée ou un convertisseur de courant continu en un courant alternatif, monophasé ou polyphasé. Ainsi, l'onduleur permet d'adapter les signaux électriques directement produits par le panneau photovoltaïque en des signaux et une énergie électrique compatible avec un réseau électrique domestique alternatif et polyphasé. De cette manière, le système photovoltaïque permet de produire un courant alternatif directement injectable - et injecté - sur le réseau électrique domestique.

Dans le contexte de la présente invention, l'étape de mesure de la puissance électrique permet de mesurer une puissance électrique de manière locale, au niveau du module de commande. A cet effet, le mode de commande embarque au moins un capteur configuré pour permettre de déterminer la puissance électrique instantanée produite par le système photovoltaïque.

Le procédé de mesure conforme au premier aspect de l'invention comprend avantageusement au moins un des perfectionnements ci-dessous, les caractéristiques techniques formant ces perfectionnements pouvant être prises seules ou en combinaison :
- l'étape de mesure de la puissance électrique comporte une étape de mesure d'une intensité du signal électrique de sortie et une étape de mesure d'une tension du signal électrique de sortie. A cet effet, le module de commande comporte avantageusement une sonde de courant et une sonde de tension. Cette configuration avantageuse permet ainsi de déterminer la puissance électrique comme le produit du courant et de la tension mesurées. Selon un mode de réalisation préféré de l'invention, le module de commande est configuré pour pouvoir déterminer à la fois le courant et la tension du signal électrique de sortie, et permettant ainsi de déterminer des grandeurs électriques ultérieures, telles que par exemple une puissance électrique - active ou réactive - ou un déphasage ;
- complémentairement, l'étape de mesure de la puissance électrique comporte une étape de détermination d'un déphasage entre le courant du signal de sortie et la tension dudit signal de sortie. Cette configuration avantageuse permet ainsi de déterminer la puissance électrique mesurée par le module de commande, et notamment une puissance active et une puissance réactive, comme le produit du courant et de la tension mesurés et/ou du déphasage déterminé.

Selon une première exploitation du procédé de mesure conforme au premier aspect de l'invention, l'invention vise à proposer une protection thermique de l'au moins un système photovoltaïque et du réseau électrique domestique. A cet effet, le procédé de mesure conforme au premier aspect de l'invention comporte au moins un des perfectionnements suivants :
- le procédé comporte une étape de comparaison entre la puissance électrique mesurée et une puissance de référence. Cette étape de comparaison permet ainsi de déterminer si la puissance électrique mesurée est conforme aux attentes ou si elle présente une valeur anormale et représentative d'un fonctionnement non nominale de l'au moins un système photovoltaïque. Ainsi, le procédé permet de sécuriser à la fois un tel système photovoltaïque placé dans une installation électrique domestique, en aval d'un disjoncteur général, mais aussi le réseau électrique domestique lui-même et ses utilisateurs. En effet, dans le cas d'une installation photovoltaïque industrielle, celle-ci est raccordée à un circuit électrique spécifique et la problématique de sécurité dont il est ici question n'est pas pertinente. En outre, les installations photovoltaïques qui ne sont pas branchés sur une prise électrique au réseau électrique domestique ne présentent pas non plus de tels enjeux car elles sont alors raccordées via un circuit électrique spécifique. L'invention adresse ici un procédé de protection thermique qui est spécifique à l'usage particulier d'un système photovoltaïque connecté au réseau électrique domestique via une prise électrique quelconque ;
- selon une première variante de réalisation, l'étape de comparaison est réalisée par le module de commande, le module de commande comportant une unité de traitement. Dans le contexte de l'invention, l'unité de traitement comporte des moyens de calcul, tels que par exemple un microcontrôleur ou un processeur, et une zone mémoire ;
- alternativement, l'étape de comparaison est réalisée sur un serveur distant, le module de commande comportant des moyens de communication avec ledit serveur distant, le procédé comportant une étape de transmission du courant et de la tension mesurés et du déphasage déterminé par le module de commande, l'étape de transmission étant préalable à l'étape de comparaison. Préférentiellement, l'étape de transmission comporte uniquement une transmission de la puissance calculée. Dans le contexte de la présente invention, l'étape de communication est préférentiellement du type d'une communication sans fil, ou éventuellement du type d'une communication filaire. Dans le cas d'une communication sans fil, l'étape de communication est par exemple du type d'une télécommunication, par exemple selon l'une des normes 3G, 4G, 5G ou ultérieure, ou encore selon un protocole de communication radiofréquence tel que par exemple le protocole longue distance LoRa, acronyme anglais de « Long Range », voire selon l'un des protocoles régis par la norme IEEE802.11 - connu sous le nom de wifi - ou IEEE 802.15 connue sous le nom de Bluetooth. Dans le cas d'une communication filaire, l'étape de communication est par exemple réalisée au travers d'une communication par courant porteur, au travers d'une fibre optique ou au travers d'un câble réseau, ou encore au travers d'une liaison série ;

- dans l'une ou l'autre des variantes de réalisation, la puissance de référence est inférieure à 3 kW, préférentiellement comprise entre 300 Wet 1 kW, préférentiellement égale à 900 W. La puissance de référence est préférentiellement déterminée par système photovoltaïque raccordé électriquement au réseau électrique domestique ;
- ainsi, selon un premier mode de réalisation, la puissance de référence est une valeur prédéterminée et enregistrée sur le module de commande et/ou sur un serveur distant. Dans ce premier mode de réalisation, la puissance de référence est prédéterminée et disponible sur une zone mémoire du module de commande, ou transmise par le serveur distant. Ce premier mode de réalisation est plus simple à mettre en oeuvre ;
- selon un deuxième mode de réalisation, le procédé de mesure conforme au premier aspect de l'invention comporte une étape d'adaptation de la puissance de référence en fonction de l'architecture du réseau électrique domestique auquel l'au moins un système photovoltaïque est relié électriquement. Dans ce mode de réalisation, la puissance de référence est déterminée en fonction de l'architecture du réseau électrique domestique et du ou des système photovoltaïque raccordé ;
- plus particulièrement, l'étape d'adaptation de la puissance de référence comporte une étape de détermination d'un nombre de système photovoltaïque raccordé au réseau électrique domestique, la puissance de référence étant égale à une valeur de référence normative divisée par le nombre de système photovoltaïque déterminé. Plus particulièrement, l'étape d'adaptation de la puissance de référence comporte une étape de détermination d'un nombre de système photovoltaïque raccordé à un circuit électrique donné du réseau électrique domestique, la puissance de référence étant égale à une valeur de référence normative divisée par le nombre de système photovoltaïque raccordés audit réseau électrique donné. Ainsi, la puissance de référence vis-à-vis de laquelle la puissance électrique mesurée est comparée dépend du nombre de systèmes photovoltaïques raccordés sur chaque circuit électrique du réseau électrique domestique : plus un circuit électrique comporte un grand nombre de systèmes photovoltaïques raccordés, plus la puissance de référence est basse afin d'éviter tout risque électrique résultant de la connexion d'un système photovoltaïque sur ledit circuit électrique du réseau électrique domestique, en aval du disjoncteur général. Le disjoncteur général protège l'ensemble des circuits électriques situés en aval. Ainsi, à titre d'exemple non limitatif, si un seul système photovoltaïque est raccordé à un circuit électrique du réseau électrique domestique, alors la puissance de référence est par exemple égale à 900 W. En revanche, si deux systèmes photovoltaïques sont raccordés sur un même circuit électrique du réseau électrique domestique, alors la puissance de référence est par exemple égale à 450 W. D'une manière générale, si N systèmes photovoltaïques sont raccordés à un même circuit électrique du réseau électrique domestique, N étant un entier naturel, alors la puissance de référence est par exemple égale à 900/N W ;
- l'étape d'adaptation prend la forme d'une déclaration du nombre de systèmes photovoltaïques raccordés à un même circuit électrique du réseau électrique domestique, notamment à l'aide d'une application mobile ;
- dans le cas où le module de commande est relié au réseau électrique domestique par le biais d'un adaptateur en courant porteur, l'étape d'adaptation comporte (i) une étape d'émission d'un signal de requête sur le réseau électrique domestique via l'adaptateur en courant porteur, et (ii) une étape de réception d'un signal d'identification émis par au moins un autre module de commande d'un autre système photovoltaïque raccordé au même réseau électrique domestique. Cette configuration avantageuse permet de sonder le réseau électrique domestique afin de de détecter la présence du module de commande de chaque système photovoltaïque raccordé. Dans le contexte de l'invention, l'étape d'émission et l'étape de réception correspondent ainsi à un « ping » du réseau électrique domestique. Cette configuration avantageuse permet ainsi, à partir du signal courant porteur, dont un débit varie en fonction d'une distance entre deux modules de commande ainsi reliés entre eux via le réseau électrique domestique, de pouvoir estimer si lesdits deux modules de commande sont reliés entre eux via un même circuit électrique ou s'ils le sont au travers de deux circuits électriques différents. Cette configuration avantageuse permet ainsi de pouvoir adapter chaque système photovoltaïque en fonction de l'implantation de tous les systèmes photovoltaïques sur le même réseau électrique domestique, de manière automatique et sans déclaration préalable. Plus généralement, cette configuration permet d'adapter chaque système photovoltaïque en fonction de l'implantation de tous les systèmes photovoltaïques sur le même réseau électrique domestique, en suggérant une valeur de puissance de référence adaptée à l'implantation électrique des systèmes photovoltaïques sur le réseau électrique domestique, préalablement à une validation ou à une correction par l'utilisateur. En d'autres termes, l'utilisation d'une connexion en courant porteur permet à un module de commande donné d'un système photovoltaïque donné de déterminer la distance le séparant d'un autre module de commande d'un autre système photovoltaïque ;

- consécutivement, le nombre de système photovoltaïque électrique est alors fixé en fonction d'un nombre de signaux d'identification reçus consécutivement à l'étape d'émission ;
- le procédé comporte une étape d'isolation électrique de l'au moins un système photovoltaïque si la puissance électrique mesurée est supérieure à la puissance de référence, le module de commande comportant un organe de couplage électrique configuré pour, sélectivement, raccorder ledit au moins un système photovoltaïque au réseau électrique domestique, l'organe de couplage électrique étant configuré dans un état fermé et, désaccoupler ledit au moins un système photovoltaïque du réseau électrique domestique, l'organe de couplage électrique étant configuré dans un état ouvert. Cette configuration avantageuse permet de proposer une fonction sécuritaire embarquée directement dans le module de commande. Dans le contexte de la présente invention, l'organe de couplage électrique est un dispositif électrique pouvant être sélectivement configuré pour établir une connexion électrique ou pour isoler électriquement le système photovoltaïque du réseau électrique domestique. A titre d'exemple non limitatif, l'organe de couplage électrique peut être du type d'un interrupteur, d'un relai électrique ou encore d'un ou plusieurs transistors électriques.

Selon une deuxième exploitation du procédé de mesure conforme au premier aspect de l'invention, l'invention vise à proposer une analyse automatique de la performance de l'au moins un système photovoltaïque raccordé au réseau électrique domestique. A cet effet, le procédé de mesure conforme au premier aspect de l'invention comporte au moins un des perfectionnements suivants :
- le procédé de mesure conforme au premier aspect de l'invention comporte (i) une étape de transmission du courant et de la tension mesurés et du déphasage déterminé par le module de commande, l'étape de transmission étant mise en oeuvre par des moyens de communication du module de commande, et (ii) une étape d'analyse de la puissance électrique mesurée de l'au moins un système photovoltaïque au regard de données comparatives. Ainsi, le procédé de mesure selon l'invention permet désormais de pouvoir transmettre les données mesurées par le module de commande
- courant et/ou tension et/ou déphasage au serveur distant. Complémentairement, l'étape de transmission peu transmettre des paramètres complémentaires relatifs au système photovoltaïque et/ou à son installation, tel que par exemple des coordonnées GPS de l'installation dudit système photovoltaïque, son altitude, son orientation cardinale, son inclinaison par rapport à l'horizontal, la superficie de panneaux photovoltaïques, une date, une heure, un modèle ou un numéro de série ;
- comme évoqué précédemment, les moyens de communication sont du type d'une communication sans fil, ou éventuellement du type d'une communication filaire. Dans le cas d'une communication sans fil, l'étape de communication est par exemple du type d'une télécommunication, par exemple selon l'une des normes 3G, 4G, 5G ou ultérieure, ou encore selon un protocole de communication radiofréquence tel que par exemple le protocole longue distance LoRa, acronyme anglais de « Long Range », voire selon l'un des protocoles régis par la norme IEEE802.11 - connu sous le nom de wifi - ou IEEE 802.15 connue sous le nom de Bluetooth. Dans le cas d'une communication filaire, l'étape de communication est par exemple réalisée au travers d'une communication par courant porteur, au travers d'une fibre optique ou au travers d'un câble réseau, ou encore au travers d'une liaison série ;
- l'étape d'analyse comporte une étape de comparaison de la puissance électrique mesurée de l'au moins un système photovoltaïque et des puissances électriques d'autres systèmes photovoltaïques raccordés à d'autres réseaux électriques domestiques et bénéficiant de conditions d'exploitation identiques ou semblables. Cette configuration avantageuse permet ainsi de détecter un éventuel fonctionnement anormal du système photovoltaïque, de manière simple et efficace par comparaison. Dans le contexte de la présente invention, l'identité ou la ressemblance des conditions d'exploitation correspond respectivement à une même région ou à une région voisine, une même orientation cardinale ou une orientation cardinale proche - une différence d'orientation cardinale étant inférieure à 10°, une même inclinaison ou une inclinaison proche - une différence d'inclinaison étant inférieure à 10° ;
- l'étape d'analyse comporte une étape de rapprochement de la puissance électrique mesurée de l'au moins un système photovoltaïque avec des abaques. Cette configuration avantageuse permet de comparer les données transmises par le module de commande avec des valeurs théoriques attendues, rendant ainsi possible de détecter un écart inapproprié par rapport à celles-ci ;
- l'étape de rapprochement comporte une étape d'intégration de données météorologiques associées à l'au moins un système photovoltaïque. Les données météorologiques comportent une température extérieure, une pression, une hygrométrie et/ou un ensoleillement ;
- l'étape d'analyse forme ainsi une étape de diagnostic d'un état de fonctionnement de l'au moins un système photovoltaïque en fonction de l'étape de rapprochement et/ou de l'étape de comparaison.

Selon une troisième exploitation du procédé de mesure conforme au premier aspect de l'invention, l'invention vise à proposer une fonction d'anti-réjection de courant pour l'au moins un système photovoltaïque raccordé au réseau électrique domestique. A cet effet, le procédé de mesure conforme au premier aspect de l'invention comporte au moins un des perfectionnements suivants :
- le procédé de mesure comporte une étape recoupement entre la puissance électrique mesurée de l'au moins un système photovoltaïque et une puissance électrique consommée par le réseau électrique domestique auquel l'au moins un système photovoltaïque est raccordé. Cette configuration avantageuse permet ainsi de comparer la puissance électrique mesurée et produite par le système photovoltaïque et la puissance électrique consommée par le réseau électrique domestique ;
- le procédé comporte une étape d'isolation électrique de l'au moins un système photovoltaïque si la puissance électrique mesurée de l'au moins un système photovoltaïque est inférieure à la puissance électrique du réseau électrique domestique correspondant, le module de commande comportant un organe de couplage électrique configuré pour, sélectivement, raccorder ledit au moins un système photovoltaïque au réseau électrique domestique, l'organe de couplage électrique étant configuré dans un état fermé et, désaccoupler ledit au moins un système photovoltaïque du réseau électrique domestique, l'organe de couplage électrique étant configuré dans un état ouvert. Dans le contexte de la présente invention, l'organe de couplage électrique est un dispositif électrique pouvant être sélectivement configuré pour établir une connexion électrique ou pour isoler électriquement le système photovoltaïque du réseau électrique domestique. A titre d'exemple non limitatif, l'organe de couplage électrique peut être du type d'un interrupteur, d'un relai électrique ou encore d'un ou plusieurs transistors électriques.

Selon un deuxième aspect de l'invention, il est proposé un ensemble électrique comportant un réseau électrique domestique et au moins un système photovoltaïque, chaque système photovoltaïque comportant :
- un panneau photovoltaïque configuré pour générer un signal électrique continu de sortie à partir d'une énergie solaire ;
- un onduleur configuré pour transformer le signal électrique continu de sortie généré par le panneau photovoltaïque en un signal électrique alternatif adapté au réseau électrique domestique ;
- un câble électrique dont une première extrémité est reliée électriquement à l'onduleur et une deuxième extrémité comporte un dispositif de connexion électrique permettant de coupler électriquement le système photovoltaïque sur le réseau électrique domestique ;
- un module de commande relié électriquement à l'onduleur et au dispositif de connexion électrique, le module de commande étant configuré pour mettre en oeuvre tout ou partie des étapes du procédé de mesure conforme au premier aspect de l'invention ou selon l'un quelconque de ses perfectionnements.

L'ensemble électrique conforme au deuxième aspect de l'invention comprend avantageusement au moins un des perfectionnements ci-dessous, les caractéristiques techniques formant ces perfectionnements pouvant être prises seules ou en combinaison :
- le module de commande comporte des moyens de communication vers un serveur distant, le module de commande étant configuré pour transmettre vers le serveur distant la puissance électrique mesurée et recevoir des instructions ;
- le module de commande comporte un organe de couplage électrique configuré pour, sélectivement, raccorder ledit au moins un système photovoltaïque au réseau électrique domestique, l'organe de couplage électrique étant configuré dans un état fermé et, désaccoupler ledit au moins un système photovoltaïque du réseau électrique domestique, l'organe de couplage électrique étant configuré dans un état ouvert, le module de commande étant configuré pour mettre en oeuvre le procédé de selon l'un quelconque de ses perfectionnements.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- La figure.1 illustre une vue schématique d'un ensemble électrique selon l'invention, mettant en oeuvre un système photovoltaïque dans un réseau électrique domestique ;
- La figure 2 illustre une vue schématique d'un exemple de réalisation d'un module de commande du système photovoltaïque de la FIGURE 1 ;
- La figure 3 illustre une vue synoptique du procédé de mesure conforme au premier aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

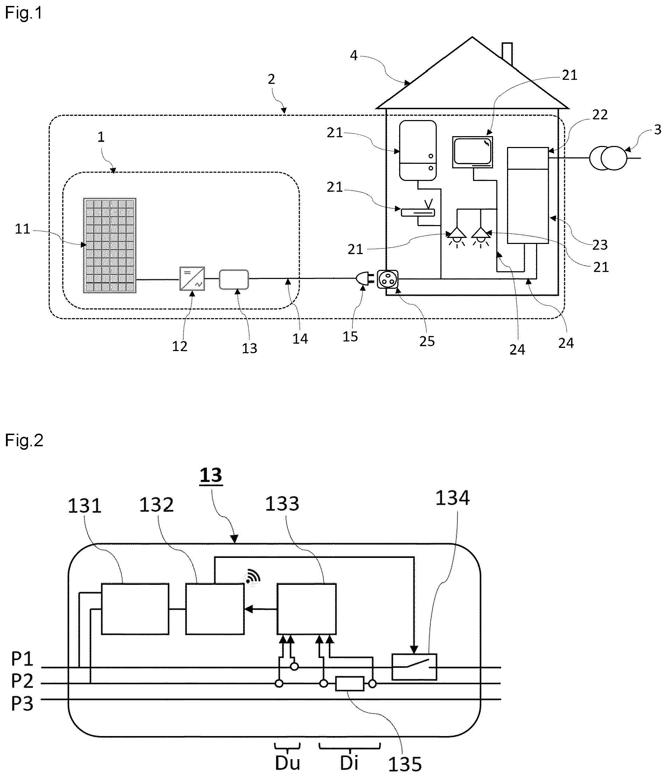

En référence avec la FIGURE 1, le domaine de l'invention est spécifiquement celui des installations électriques domestiques, au sein d'un habitat 4 individuel ou d'un habitat 4 collectif. Plus particulièrement, l'invention concerne le raccordement électrique d'un ou plusieurs systèmes photovoltaïques 1 à un réseau électrique domestique 2.

Le réseau électrique domestique 2 adresse l'ensembles des dispositifs électriques à l'intérieur de l'habitat 4, ou en lien direct avec ledit habitat 4. Le réseau électrique domestique 2 diffère d'un réseau électrique de distribution qui a pour objet de fournir à l'habitat 4 l'énergie électrique nécessaire au fonctionnement de ses dispositifs électriques.

Le réseau électrique domestique 2 peut être isolé ou raccordé au réseau électrique de distribution par l'intermédiaire d'un disjoncteur général 22 d'un tableau électrique 23 placé en entrée du réseau électrique domestique 2. Ensuite, plusieurs circuits électriques 24 s'étendent depuis le tableau électrique 23, en aval du disjoncteur général 22, vers plusieurs consommateurs électriques.

Dans le contexte de l'invention, les consommateurs électriques sont des dispositifs électriques, des appareils électriques, qui utilisent l'énergie électrique fournie par le réseau électrique domestique 2, via le réseau électrique de distribution, pour fonctionner. A titre d'exemples non limitatifs, de tels consommateurs électrique peuvent être des lampes, des appareils électroménagers, une télévision ou un module de communication sans fil.

De manière particulière, le contexte de l'invention se limite aussi à un ou plusieurs systèmes photovoltaïques 1 raccordés à l'une des prises électriques du réseau électrique domestique 2. Dans le cas où le réseau électrique domestique 2 comporte plusieurs systèmes photovoltaïques 1 distincts, par exemples associés à des éléments de toitures différents ou disposés selon des orientations cardinales différentes, alors il est préférable que chaque système photovoltaïque 1 soit associé à un circuit électrique 24 différents, ou à une prise électrique 25 différente. Dans le cas où plusieurs systèmes photovoltaïques 1 sont raccordés électriquement à un même circuit électrique 24 , par exemple au travers d'une même prise électrique 25 ou si les prises électriques 25 auxquelles sont raccordés électriquement les systèmes photovoltaïques 1 font parties d'un même circuit électrique 24, alors il est pertinent de d'adapter une puissance électrique de référence au-delà de laquelle il est nécessaire de ne plus faire fonctionner l'un des systèmes photovoltaïques 1 pour garantir une sécurité électrique du réseau électrique domestique 2.

De tels systèmes photovoltaïques 1 comportent :
- un panneau photovoltaïque 11 configuré pour générer un signal électrique continu de sortie à partir d'une énergie solaire. Le panneau photovoltaïque 11 comporte un ou plusieurs panneaux solaires, chaque panneau solaire étant configuré pour convertir l'énergie solaire en une énergie électrique, et éventuellement thermique. Le panneau photovoltaïque 11 présente une surface de panneaux solaires de quelques mètres carré, voire de plusieurs dizaines de mètres carrés. D'une manière générale, le panneau photovoltaïque 11 présente une surface de panneaux solaires inférieurs à 100 m². Le panneau photovoltaïque 11 est placé dans le voisinage direct de l'habitat 4, de sorte à pouvoir être branché directement sur la prise électrique 25 du réseau électrique domestique 2. Complémentairement, le système photovoltaïque 1 comprend aussi un dispositif de fixation permettant, d'une part, de fixer solidairement le panneau photovoltaïque 11 à un support - un mur, un toit, une terrasse - et, d'autre part, d'incliner ledit panneau photovoltaïque 11 relativement à au moins un axe de rotation ;
- un onduleur 12 configuré pour transformer le signal électrique continu de sortie généré par le panneau photovoltaïque 11 en un signal électrique alternatif adapté à un réseau électrique domestique 2. Plus particulièrement, l'onduleur 12 comporte un convertisseur de tension continue en une tension alternative ou un convertisseur de courant continu en un courant alternatif, afin de pouvoir injecter le signal électrique alternatif ainsi converti sur une phase P2 du réseau électrique domestique 2 ;
- un câble électrique 14 dont une première extrémité est reliée électriquement à l'onduleur 12 et une deuxième extrémité 15 comporte un dispositif de connexion électrique permettant de coupler électriquement le système photovoltaïque 1 sur une prise électrique 25 du réseau électrique domestique 2 ;
- un module de commande 13 relié électriquement à l'onduleur 12 et au dispositif de connexion électrique, le module de commande 13 comportant (i) un organe de couplage 134 électrique configuré pour, sélectivement, raccorder ledit au moins un système photovoltaïque 1 au réseau électrique domestique 2, l'organe de couplage 134 électrique étant configuré dans un état fermé et, désaccoupler ledit au moins un système photovoltaïque 1 du réseau électrique domestique 2, l'organe de couplage 134 électrique étant configuré dans un état ouvert, et (ii) des moyens de communication avec un serveur distant.

L'organe de couplage 134 électrique prend la forme d'un relai ou d'un interrupteur de n'importe quel type, l'organe de couplage 134 électrique étant piloté par le module de commande 13 afin de pouvoir contrôler son état, ouvert ou fermé, en fonction d'une commande d'isolement réceptionnée par le module de commande 13.

En référence à la FIGURE 2, le module de commande 13 comporte un boitier logeant :
- une unité d'alimentation électrique 131 reliée électriquement au réseau électrique domestique 2, et plus particulièrement à une phase P2 et à un neutre P1 dudit réseau électrique domestique 2, de sorte à permettre un fonctionnement du module de commande 13 ;
- une unité de communication 132, préférentiellement sans fil, permettant au module de communication de recevoir, et éventuellement transmettre, respectivement des commandes et des paramètres. Les commandes réceptionnées par le module de commande 13 via son unité de communication 132 sont envoyées par un serveur distant non représenté sur les FIGURES, tandis que les paramètres sont des données techniques caractéristiques du système photovoltaïque 1 et éventuellement du réseau électrique domestique 2s et qui peuvent être transmises par le module de commande 13 afin d'autoriser la réalisation de certaines fonctions techniques plus complexes. Dans le contexte de l'invention, l'unité de communication 132 est par exemple du type d'une puce de télécommunication, par exemple selon l'un des protocoles 3G, 4G, 5G ou supérieur, ou encore du type d'un puce WIFI, Bluetooth ou d'une puce de communication radiofréquence de type LoRa ;
- une unité de métrologie 133 comportant un ou plusieurs capteurs configurés pour mesurer un courant électrique produit par le système photovoltaïque 1 et/ou une tension électrique produite par le système photovoltaïque 1 et/ou un déphasage entre le courant et la tension. A cet effet, l'unité de métrologie 133 comporte une résistance 135 de shunt placée sur la phase P2 du réseau électrique domestique 2 et configurée pour permettre une mesure de courant Di - au travers d'une mesure de tension Du aux bornes de la résistance 135 de shunt - et une mesure de tension Du entre la phase P2 et le neutre P1 du réseau électrique domestique 2 auquel le module de commande 13 est raccordé électriquement ;
- l'organe de couplage 134 électrique tel que décrit précédemment. L'organe de couplage 134 électrique est relié notamment à l'unité de communication 132 afin d'autoriser son pilotage en fonction des commandes réceptionnées et/ou des paramètres transmis. Dans le contexte de l'invention, l'organe de couplage 134 prend la forme d'un relai placé sur le neutre P1 et/ou sur la phase P2 du réseau électrique domestique 2 auquel le module de commande 13 est relié.

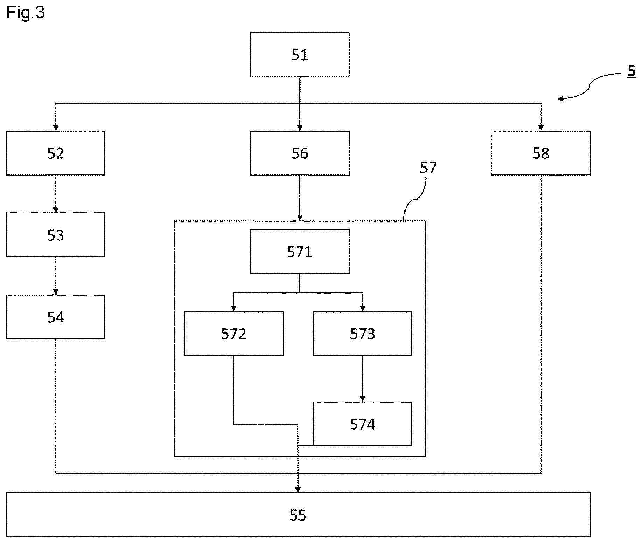

En référence à la FIGURE 3, l'invention adresse un procédé 5 de mesure mettant en oeuvre le système photovoltaïque 1 décrit précédemment. Un tel procédé 5 de mesure comporte une étape de mesure 51 d'une puissance électrique produite par le système photovoltaïque 1, l'étape de mesure 51 de la puissance électrique étant réalisée par le module de commande 13.

Plus particulièrement, dans l'exemple de réalisation illustré, l'étape de mesure 51 de la puissance électrique comporte :
- une étape de mesure 51 d'une intensité du signal électrique de sortie ;
- une étape de mesure 51 d'une tension du signal électrique de sortie ;
- une étape de détermination d'un déphasage entre le courant du signal de sortie et la tension dudit signal de sortie.

Le module de commande 13 permet ainsi de déterminer la puissance électrique produite par le système photovoltaïque 1 comme le produit du courant et de la tension mesurés, et éventuellement du déphasage déterminé.

Selon une première exploitation, le procédé 5 de mesure est utilisé afin de proposer une fonction de protection thermique de chaque système photovoltaïque 1 et du réseau électrique domestique 2. A cet effet, le procédé 5 de mesure comporte une étape de comparaison 52 entre la puissance électrique mesurée et une puissance de référence, afin de déterminer si la puissance électrique mesurée est conforme aux attentes ou si elle présente une valeur anormale et représentative d'un fonctionnement non nominale de chaque système photovoltaïque 1.

L'étape de comparaison 52 est réalisée par le module de commande 13, le module de commande 13 comportant une unité de traitement ou l'étape de comparaison 52 est réalisée sur un serveur distant, via l'unité de communication 132 du module de commande 13 afin de pouvoir communiquer avec ledit serveur distant. Dans ce cas, le procédé 5 de mesure comporte une étape de transmission 56 du courant et de la tension mesurés, et/ou du déphasage déterminé par le module de commande 13, l'étape de transmission 56 étant préalable à l'étape de comparaison 52 précédemment évoquée. Préférentiellement, l'étape de transmission 56 comporte uniquement une transmission de la puissance calculée.

Pour un seul système photovoltaïque 1 raccordé à l'un des circuits électriques 24 du réseau domestique, la puissance de référence est inférieure à 1 kW, préférentiellement comprise entre 300 W et 1 kW, préférentiellement égale à 900 W. En revanche, dans le cas où plusieurs systèmes photovoltaïques 1 sont raccordés au réseau électrique domestique 2, alors il est intéressant de reconsidérer la valeur de la puissance de référence afin de protéger efficacement chaque circuit électrique 24 et, finalement, le réseau électrique domestique 2 et ses utilisateurs.

Selon une première variante plus simple à mettre en oeuvre, la puissance de référence est pré-déclarée et enregistrée sur le serveur distant ou sur le module de commande 13, au moment de l'installation du ou des systèmes photovoltaïques 1. Il s'agit ainsi d'une déclaration statique qui sert de référence et de comparaison pour la mise en oeuvre de l'étape de comparaison 52.

Selon un deuxième mode de réalisation plus efficace, plus sûre et surtout adaptatif, le procédé 5 de mesure conforme comporte une étape d'adaptation 54 de la puissance de référence en fonction de l'architecture du réseau électrique domestique 2 auquel chaque système photovoltaïque 1 est raccordé électriquement.

Plus particulièrement, une telle étape d'adaptation 54 de la puissance de référence comporte :
- une étape de détermination 53 d'un nombre de système photovoltaïque 1 raccordé au réseau électrique domestique 2. De manière avantageuse, l'étape de détermination 53 est une étape de détermination du nombre de systèmes photovoltaïques 1 raccordés à l'un des circuits électriques ;
- une étape de calcul de la puissance de référence comme étant égale à une valeur de référence normative - celle qui pourrait être déclarée de manière statique par exemple - divisée par le nombre de système photovoltaïque 1 déterminé.

Ainsi, la puissance de référence vis-à-vis de laquelle la puissance électrique mesurée est comparée dépend du nombre de systèmes photovoltaïques 1 raccordés au réseau électrique domestique 2, et plus particulièrement ceux raccordés à chaque circuit électrique 24, le nombre de systèmes photovoltaïques 1 raccordés à chaque circuit électrique étant comptabilisé indépendamment des autres circuits électriques 24 : plus un circuit électrique 24 du réseau électrique domestique 2 comporte un grand nombre de systèmes photovoltaïques 1 raccordés, plus la puissance de référence - pour ce circuit électrique 24 est basse afin d'éviter tout risque électrique résultant de la connexion d'un système photovoltaïque 1 sur ledit circuit électrique 24 du réseau électrique domestique 2, en aval du disjoncteur général 22.

De manière particulièrement avantageuse, dans le cas où le module de commande 13 est relié au réseau électrique domestique 2 par le biais d'un adaptateur en courant porteur, alors l'étape d'adaptation 54 comporte :
- une étape d'émission d'un signal de requête sur le réseau électrique domestique 2 via l'adaptateur en courant porteur ; et
- une étape de réception d'un signal d'identification émis par au moins un autre module de commande 13 d'un autre système photovoltaïque 1 raccordé au même réseau électrique domestique 2.

Cette configuration avantageuse permet de sonder automatiquement le réseau électrique domestique 2 afin de de détecter la présence du module de commande 13 de chaque système photovoltaïque 1 raccordé et, finalement, de déterminer automatiquement le nombre de systèmes photovoltaïques 1 raccordés au réseau électrique domestique 2 ainsi qu'une distance séparant le module de commande de chaque système photovoltaïque. Il est ainsi possible de sécuriser automatiquement le réseau électrique domestique 2 en détectant systématiquement chaque nouveau raccordement.

Par suite, le procédé 5 comporte une étape d'isolation 55 électrique de chaque système photovoltaïque 1 si la puissance électrique mesurée est supérieure à la puissance de référence.

Selon une deuxième exploitation, le procédé 5 de mesure est utilisé afin de proposer une fonction d'analyse automatique de la performance de chaque système photovoltaïque 1 raccordé au réseau électrique domestique 2. A cet effet, le procédé 5 de mesure comporte :
- une étape de transmission 56 du courant et de la tension mesurés et/ou du déphasage déterminé par le module de commande 13, l'étape de transmission 56 étant mise en oeuvre par des moyens de communication - l'unité de communication 132 - du module de commande 13 ; et
- une étape d'analyse 57, 571 de la puissance électrique mesurée de l'au moins un système photovoltaïque 1 au regard de données comparatives.

Ainsi, le procédé 5 de mesure permet désormais de pouvoir transmettre les données mesurées par le module de commande 13 - courant et/ou tension et/ou déphasage au serveur distant. Complémentairement, l'étape de transmission 56 peu transmettre des paramètres complémentaires relatifs au système photovoltaïque 1 et/ou à son installation, tel que par exemple des coordonnées GPS de l'installation dudit système photovoltaïque 1, son altitude, son orientation cardinale, son inclinaison par rapport à l'horizontal, la superficie de panneaux photovoltaïques, une date, une heure, un modèle ou un numéro de série.

L'étape d'analyse 57, 571 comporte avantageusement :
- une étape de comparaison 572 de la puissance électrique mesurée de l'au moins un système photovoltaïque 1 et des puissances électriques d'autres systèmes photovoltaïques 1 raccordés à d'autres réseaux électriques domestiques et bénéficiant de conditions d'exploitation identiques ou semblables ; et/ou
- une étape de rapprochement 573 de la puissance électrique mesurée de l'au moins un système photovoltaïque 1 avec des abaques. L'étape de rapprochement 573 comporte une étape d'intégration 574 de données météorologiques associées à l'au moins un système photovoltaïque 1.

L'étape d'analyse 57, 571 forme ainsi une étape de diagnostic d'un état de fonctionnement de l'au moins un système photovoltaïque 1 en fonction de l'étape de rapprochement 573 et/ou de l'étape de comparaison 572.

Selon une troisième exploitation, le procédé 5 de mesure est utilisé afin de proposer une fonction d'anti-réjection de chaque système photovoltaïque 1 raccordé au réseau électrique domestique 2. A cet effet, le procédé 5 de mesure comporte :
- une étape recoupement entre la puissance électrique mesurée de l'au moins un système photovoltaïque 1 et une puissance électrique consommée par le réseau électrique domestique 2 auquel l'au moins un système photovoltaïque 1 est raccordé ;
- une étape d'isolation 55 électrique de l'au moins un système photovoltaïque 1 si la puissance électrique mesurée de l'au moins un système photovoltaïque 1 est inférieure à la puissance électrique du réseau électrique domestique 2 correspondant.

En synthèse, l'invention concerne un procédé 5 de mesure d'une puissance électrique produite par un système photovoltaïque 1, configuré pour pouvoir être raccordé électriquement à un réseau électrique domestique 2, le système photovoltaïque 1 étant branché à une prise électrique 25 d'un circuit électrique 24 situé en aval d'un disjoncteur général 22 de sorte à pouvoir injecter sur le réseau électrique domestique 2 une énergie électrique obtenue par transformation d'une énergie solaire incidente, le procédé 5 de mesure permettant de connaître et mesurer localement, au niveau du module de commande 13, le fonctionnement dudit système photovoltaïque 1.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé (5) de mesure de puissance électrique produite par au moins un système photovoltaïque (1), chaque système photovoltaïque (1) comprenant :
- un panneau photovoltaïque (11) configuré pour générer un signal électrique continu de sortie à partir d'une énergie solaire ;
- un onduleur (12) configuré pour transformer le signal électrique continu de sortie généré par le panneau photovoltaïque (11) en un signal électrique alternatif adapté à un réseau électrique domestique (2) ;
- un câble électrique (14) dont une première extrémité est reliée électriquement à l'onduleur (12) et une deuxième extrémité (15) comporte un dispositif de connexion électrique permettant de coupler électriquement le système photovoltaïque (1) sur le réseau électrique domestique (2) ;
- un module de commande (13) relié électriquement à l'onduleur (12) et au dispositif de connexion électrique ;
le procédé (5) comportant une étape de mesure (51) d'une puissance électrique produite par le système photovoltaïque (1), l'étape de mesure (51) de la puissance électrique étant réalisée par le module de commande (13) ;
**caractérisé en ce que** le procédé (5) comporte en outre :
- une étape de transmission (56) du courant et de la tension mesurés, et éventuellement du déphasage déterminé par le module de commande (13), l'étape de transmission (56) étant mise en oeuvre par des moyens de communication du module de commande (13) ; et
- une étape d'analyse (57, 571) de la puissance électrique mesurée de l'au moins un système photovoltaïque (1) au regard de données comparatives, l'étape d'analyse (57, 571) comportant une étape de comparaison (572) de la puissance électrique mesurée de l'au moins un système photovoltaïque (1) et des puissances électriques d'autres systèmes photovoltaïques (1) raccordés à d'autres réseaux électriques domestiques et bénéficiant de conditions d'exploitation identiques ou semblables.

2. Procédé (5) de mesure selon la revendication précédente, dans lequel l'étape de mesure (51) de la puissance électrique comporte une étape de mesure (51) d'une intensité du signal électrique de sortie, une étape de mesure (51) d'une tension du signal électrique de sortie, et éventuellement une étape de détermination d'un déphasage entre le courant du signal de sortie et la tension dudit signal de sortie.

3. Procédé (5) de mesure selon l'une quelconque des revendications précédentes, dans lequel l'étape d'analyse (57, 571) comporte une étape de rapprochement (573) de la puissance électrique mesurée de l'au moins un système photovoltaïque (1) avec des abaques.

4. Procédé (5) de mesure selon la revendication précédente, dans lequel l'étape de rapprochement (573) comporte une étape d'intégration (574) de données météorologiques associées à l'au moins un système photovoltaïque (1).

5. Ensemble électrique comportant un réseau électrique domestique (2) et au moins un système photovoltaïque (1), chaque système photovoltaïque (1) comportant :
- un panneau photovoltaïque (11) configuré pour générer un signal électrique continu de sortie à partir d'une énergie solaire ;
- un onduleur (12) configuré pour transformer le signal électrique continu de sortie généré par le panneau photovoltaïque (11) en un signal électrique alternatif adapté au réseau électrique domestique (2) ;
- un câble électrique (14) dont une première extrémité est reliée électriquement à l'onduleur (12) et une deuxième extrémité (15) comporte un dispositif de connexion électrique permettant de coupler électriquement le système photovoltaïque (1) sur le réseau électrique domestique (2) ;
- un module de commande (13) relié électriquement à l'onduleur (12) et au dispositif de connexion électrique, le module de commande (13) étant configuré pour mettre en oeuvre tout ou partie des étapes du procédé (5) selon l'une quelconque des revendications 1 à 4.

6. Ensemble électrique selon la revendications précédente, dans lequel le module de commande (13) comporte un organe de couplage (134) électrique configuré pour, sélectivement, raccorder ledit au moins un système photovoltaïque (1) au réseau électrique domestique (2), l'organe de couplage (134) électrique étant configuré dans un état fermé et, désaccoupler ledit au moins un système photovoltaïque (1) du réseau électrique domestique (2), l'organe de couplage (134) électrique étant configuré dans un état ouvert, le module de commande (13) étant configuré pour mettre en oeuvre le procédé (5) de selon l'une quelconque des revendications 1 à 4.
